# EUROPEAN PATENT APPLICATION

(11) **EP 2 357 569 A1**
(43) Date of publication of application: **17.08.2011**
(21) Application number: 10152280.3
(22) Date of filing: 01.02.2010
(51) Int. Cl.: G06F 13/40

(54) **Scalable apparatus adapted to provide a range of functionalities**

(71) Applicant: THALES NEDERLAND B.V., 7550 GD Hengelo (NL)
(72) Inventor: Laarhuis, Jan, 7534 PA, Enschede (NL)
(74) Representative: Nguyen Van Yen, Christian

(57) **Abstract**

There is disclosed a scalable apparatus adapted to provide a range of functionalities.

The apparatus comprises a plurality of hardware modules, each module implementing one or a plurality of the said functionalities.

The modules are connectable one to the others by stacking them one on the others, so as to provide an operable set of functionalities.

## Description

The present invention relates to a scalable apparatus adapted to provide a range of functionalities. For example, the invention is particularly applicable to naval surveillance.

Naval systems serve to support the missions of their users, usually but not exclusively navies. However, adapting these system capabilities to the governing operational demands is challenging. Generally, the more missions a system must be able to support, the more capabilities the system needs to have, which makes it unnecessarily complex. Either multiple tailor-made systems are required to support the various missions to be performed or one tailor-made complex system is used that incorporates all required capabilities. Both approaches lead to sub-optimal systems in terms of cost and complexity.

The present invention aims to provide an apparatus which may be used to overcome the aforementioned drawbacks. The invention circumvents these drawbacks by considering a number of system modules, each having a specific set of capabilities, and enabling easy and flexible composition of these modules. Specific and deliberate division of the full set of capabilities are performed over the identified modules, such that specific combinations of modules yields capability sets appropriate for a certain class of missions. In addition, a physical plug is defined, which enables the coupling of a module on a platform, as well as the recursive coupling of modules mutually in order to compose the required capability set. Recursive coupling results in a stack of modules attached to a platform. Such coupling of modules allows users to rapidly create system configurations that meet the planned missions by composing the modules with the appropriate capabilities. System reconfiguration can be done equally rapid. At its most general, the invention proposes a scalable apparatus adapted to provide a range of functionalities, the apparatus comprising a plurality of hardware modules, each module implementing one or a plurality of the said functionalities. The modules are connectable one to the others by stacking them one on the others, so as to provide an operable set of functionalities.

Preferably, each hardware module may comprise a first connection on one of its side and a second connection on the side opposite.

Advantageously, the first connection may be a male plug on the bottom side and the second connection may be a female plug on the top side, so as to allow recursive coupling of modules.

In a preferred embodiment, each plugging of a male plug into a female plug may provide mechanical support, power supply and data interface.

For example, the module at the bottom of the stack may be pluggable into a platform which may supply power. For example, the platform may be a naval ship.

One of the hardware modules may provide a data distribution functionality. One of the hardware modules may provide a surveillance functionality. One of the hardware modules may provide a temporal and/or spatial reference functionality. One of the hardware modules may provide a functionality for observing surface objects by optical means.

In a preferred embodiment, the module providing the functionality for observing surface objects may comprise one or a plurality of cameras ensuring a 360° coverage, each camera providing a pan control functionality and/or a tilt control functionality and/or a zoom control functionality and/or a snapshot functionality and/or a video streaming functionality.

Advantageously, the module providing the functionality for observing surface objects may comprises a plurality of cameras, at least one of said cameras providing a functionality for tracking surface objects, while the other cameras simultaneously provide a 360° surveillance functionality.

The female plug may comprise three cylindrical hollows and the male plug may comprise three cylindrical elements, the three cylindrical elements tightly fitting into the three cylindrical hollows respectively, so as to provide firm and solid coupling of modules.

The female plug may comprise two rectangular hollows and the male plug may comprise two rectangular elements, the two elements loosely fitting into the two hollows respectively, so as to enable the current to transit between modules.

In a preferred embodiment, the female plug may comprise a short-range wireless communication transceiver and the male plug may comprise a short-range wireless communication transceiver, the transceivers facing each other, so as to enable data to be exchanged between modules.

Advantageously, each pluggable module may include a network segment comprising a communication host and a router or a switch, so as to extend the network of the platform and/or the network of the existing stack of modules.

In addition of extending the applicability of a system to a wider range of operational missions, a further advantage of the present invention in many of its aspects is that it provides an integrated solution for connecting hardware modules:
o at the mechanical level by physically securing an additional module to the platform or the existing stack of modules;
o at the power level by tapping electrical power for an additional module from the platform or the existing stack of modules;
o at the data level by including an additional module into the network formed by the existing stack of modules including the platform.

Non-limiting examples of the invention are described below with reference to the accompanying drawings in which :
- Figure 1a, schematically illustrates by a perspective view an exemplary embodiment of an apparatus according to the invention;
- Figure 1b, schematically illustrates by a bottom view an exemplary embodiment of a module according to the invention;
- Figures 2a, 2b, 3a, 3b, 4a and 4b schematically illustrate exemplary embodiments of plugs according to the invention;
- Figure 5 schematically illustrates an exemplary interconnection of modules according to the invention;
- Figure 6 schematically illustrates, by a protocol stack, an exemplary processing of the communication layers according to the invention.
In the figures, like reference signs are assigned to like items.

In the present exemplary embodiment, it is described a distributed surveillance system comprising a plurality of nodes placed at appropriate height on geographically dispersed platforms, for example navy ships, each node comprising an apparatus according to the invention. The primary capability of the system is observation, which includes surveillance (object detection, tracking and fusion), reconnaissance (object classification and identification) and object tracking for guidance of effectors. Though each node is perfectly useful in a stand-alone configuration, placing nodes on spatially distributed platforms creates a distributed system offering functionalities far beyond the current state-of-the-art such as Tactical Data Link systems.

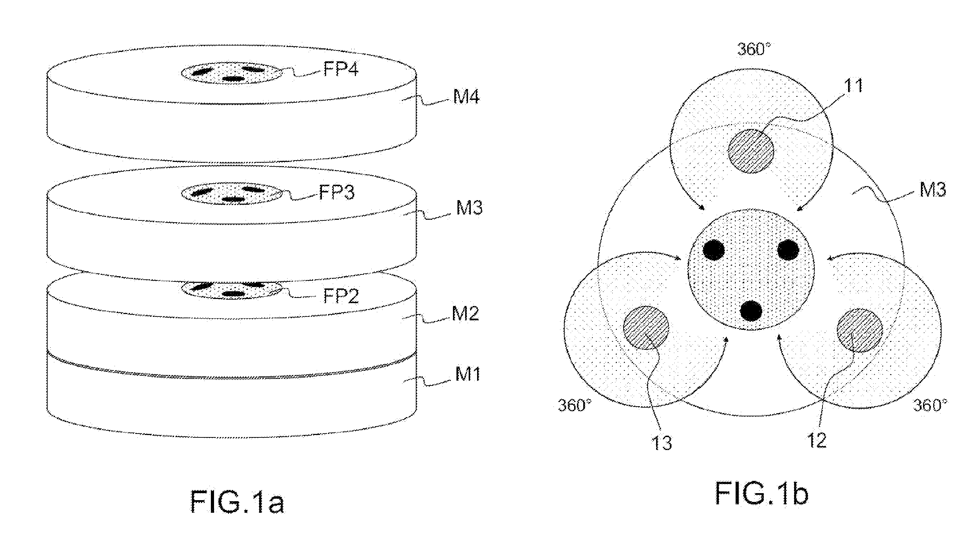

Figure 1a schematically illustrates by a perspective view an exemplary apparatus according to the invention. The apparatus may comprise four hardware modules M1, M2, M3 and M4, which are respectively stacked one on the others. The modules M1, M2, M3 and M4 are pre-integrated modules offering complementary capabilities.

The module M1 may be an Ad-hoc Distribution module (AD-module) dealing with inter-platform data distribution. The AD-module M1 may contain an implementation of a specific communication architecture, which may enable discovery of and auto-configuration with peer AD-modules, and subsequent communication with them. Radio transmission may be used to connect multiple AD-modules. A beam-forming antenna coupled to an RF radio system may provide the preferred communication when modules are in line-of-sight. A skywave antenna coupled to an HF radio system may provide the backup communication when modules are beyond-line-of-sight. A number of AD-modules may collectively form an lP *ad-hoc* network in the sense that AD-modules may spontaneously join and leave the system, and may move within the system. Communication between non-neighbouring modules may be achieved by data relaying at the intermediate AD-modules. Middleware based on the 'publish-subscribe' paradigm may offer a simple interface to a wide variety of applications. These applications may reside at any of the composed modules M1, M2, M3 or M4 described below, or may reside at the platforms supporting these modules.

The module M2 may be a Sensor and Fusion module (SF-module) observing surface objects in the surrounding area. The SF-module M2 may contain surveillance and fusion capabilities. The surveillance capabilities may be realised by multiple sensors, each sensor possibly measuring different aspects of surface objects in the environment. For example, the SF-module M2 may comprise a common navigation radar scanner coupled to an advanced radar processor, optimised for surface objects. For example, the SF-module M2 may be equipped with a simple AIS-receiver (Automatic Identification System) to be able to track and identify objects that transmit AIS-messages. For example, a Sound Direction Finder (SDF) may be arranged inside the SF-module M2, the SDF comprising a constellation of microphones able to determine the direction of a sound emitter. The fusion capabilities of the SF-module M2 may include kinematic fusion and heterogeneous fusion. Kinematic fusion may relate to the kinematic properties of detected objects and has two stages. A first stage at a local level, in which the data from all sensors in the SF-module M2 may be fused, thus resulting in a local picture. A second stage at a group level, in which all local pictures in the group may be stitched, thus resulting in a group or global picture. In order to perform group fusion, the SF-module M2 may retrieve the local pictures from all other SF-modules in the group, using its own AD-module M1 as well as all the other AD-modules in the system. In this case each node contains thus at least an SF-module and an AD-module. Using various disparate information types, heterogeneous fusion may calculate the likelihood of a certain hypothesis, for example an imminent piracy attack. As such, it may perform intention detection of suspect objects.

The module M3 may be an Electro-Optical module (EO-module) for observation and reconnaissance of surface objects. In an exemplary embodiment of an EO-module M3 according to the invention, as illustrated by a bottom view in Figure 1b, an EO-module M3 may have three cameras 11, 12 and 13 arranged at its bottom side. This involves M3 to be the lowest module in the stack of modules. The cameras 11, 12 and 13 may provide pan, tilt and zoom control functionalities, as well as snapshot and video streaming functionalities. The EO-module M3 may simultaneously perform tracking of one target and 360 degrees surveillance by allocating one of the three cameras to an object and the other two performing the surveillance. For example, the camera 11 may track objects up to e.g., 4 kilometres away from the platform, while the cameras 12 and 13 may simultaneously perform a 360° continuous surveillance up to e.g., 8 kilometres away from the platform.

The module M4 may be a Reference and Environmental module (RE-module) providing temporal and spatial references as well as various environmental quantities, which may be used by the other modules. For example in the SF-module M2, although the sensors are mutually aligned, they are not aligned with respect to northerly. For such alignment the RE-module M4 may be needed. The RE-module M4 is also needed for timestamping the measurements performed by the sensors of the SF-module M2. In addition, to correct for the instantaneous spatial orientation of the SF-module M2, the geo-spatial attitude provided by the RE-module M4 may be needed. That's why the RE-module M4 may comprise self-awareness sensors providing temporal and spatial awareness information, in order to time-stamp the sensor measurements and to transform them into absolute co-ordinates. For example, the RE-module M4 may contain a GPS-receiver (Global Positioning System), which may provide reference time and absolute geo-spatial position information. For example, the RE-module M4 may also contain an Attitude Heading Reference System (AHRS), which may provide geo-spatial attitude information like heading, pitch, jaw, etc. The time, heading and attitude information provided by the module may be used not only by other modules, but may also be used by the navigation capabilities of the supporting platform or may also be used as control signals in the case where the supporting platform is an actively stabilized platform. Besides providing temporal and spatial awareness, the RE-module M4 may also provide environmental awareness information. For this purpose, the RE-module M4 may comprise a weather sensor suite to measure the temperature, the air pressure, and the humidity at the location of the RE-module M4. The RE-module M4 may also comprise a wind sensor to measure the velocity and direction of the wind at the location of the RE-module M4. The RE-module M4 may also comprise a toxic sensor to measure environmental pollution and presence of toxic gases in the air at the location of the RE-module M4.

It is worth noting that support for a wide variety of missions may be easily obtained by tailoring the composition of modules and platforms to the need of the mission. For example, a relatively cheap surveillance system for a specific operational area may be obtained when a number of spar-buoy platforms is distributed over this area, each spar-buoy equipped with an RE-module, an AD-module and an SF-module on its top, and equipped with a Passive Sonar module (PS-module) on its bottom, which may determine the direction and characteristics of sub-surface objects in the surrounding area by use of hydrophones. One or two operation centres, equipped with an AD-module only, may consolidate and further process the information coming from the buoys.

In another example, a small navy response vessel may be equipped with an RE-module, an AD-module and an EO-module to support reconnaissance missions. In yet another example, an SF-module may be mounted on a truss tower or equivalent platform to feed the command room of a site with surveillance information. Depending on the type of surveillance, the SF-module may be replaced or complemented with an EO-module. In yet another example, having all modules on a navy vessel may provide it with a mini integrated mast functionality. Operation of such vessels in flotilla may make them behave as a single distributed system for a variety of missions.

The modules M1, M2, M3 and M4 are couplable modules, each module comprising a specific male plug at its bottom, the male plugs not being illustrated on Figure 1a, and comprising a specific female plug at its top, as illustrated on Figure 1a by FP1, FP2, FP3 and FP4 respectively. The plugs enable the recursive coupling of modules mutually as well as the coupling of any module onto the platform. It is thus worth understanding that, in the present example, each eligible platform has to be provided with a female plug at its top. When a PS-module is used, a male plug might be needed at the bottom side of the platform.

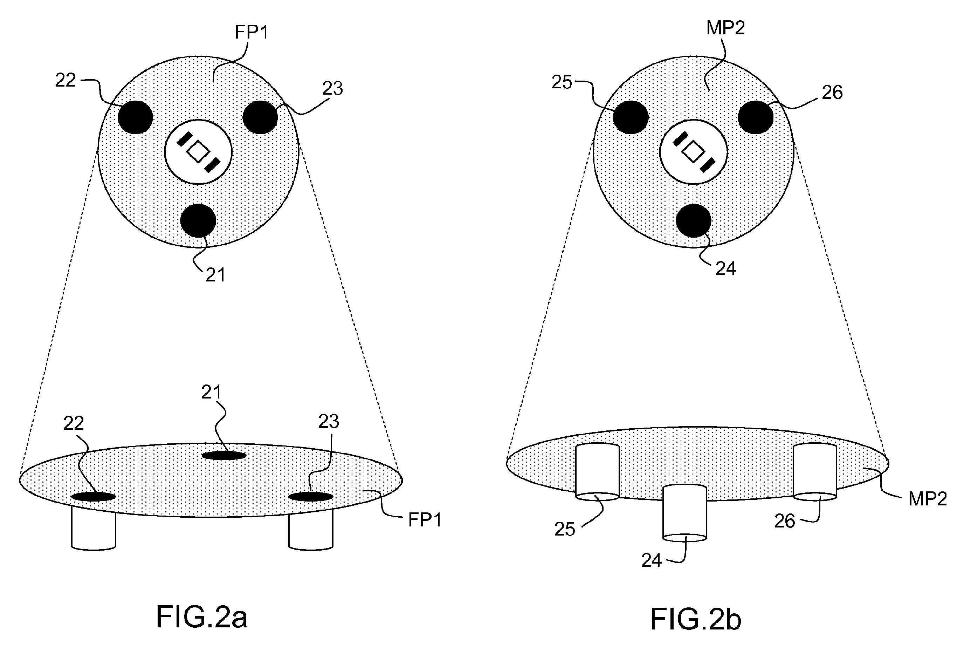

Figure 2a schematically illustrates the exemplary female plug FP1 according to the invention. Figure 2b schematically illustrates the exemplary male plug MP2 according to the invention. Each plugging provides mechanical support for firm and solid coupling between modules and for firm and solid coupling between the bottom module and the platform. Figure 2a focuses on the features of the female plug FP1, which provide mechanical support, while Figure 2b focuses on the features of the male plug MP2, which provide mechanical support. In the present example, the female plug FP1 may comprise three cylindrical hollows 21, 22 and 23 and the male plug MP2 may comprise three cylindrical elements 24, 25 and 26. The three cylindrical elements 24, 25 and 26 may tightly fit into the three cylindrical hollows 21, 22 and 23 respectively, so as to provide firm and solid coupling of the SF-module M2 into the AD-module M1. For the sake of clarity, Figures 2a and 2b focus only on the features providing mechanical support, purposely omitting to represent the features related to power and data, which are described below.

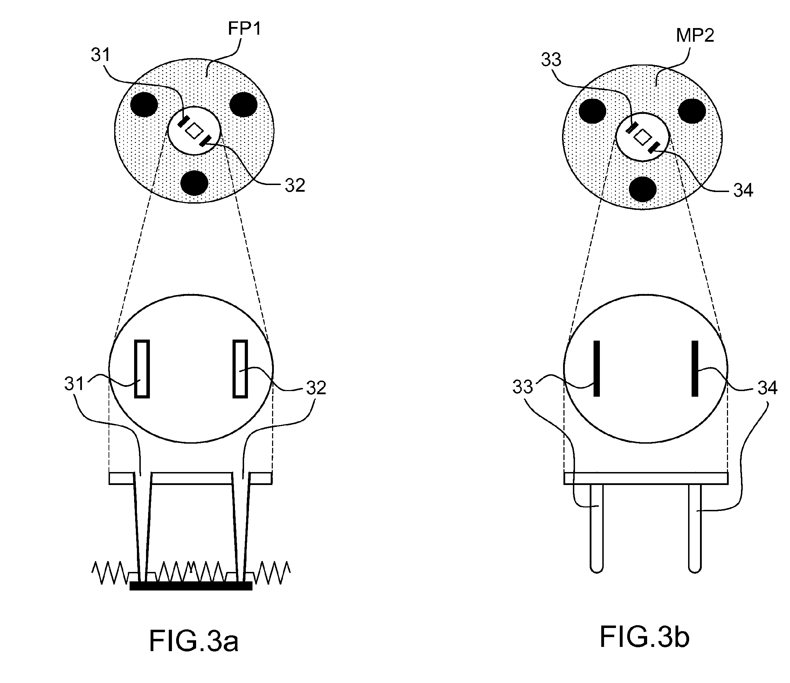

Figure 3a schematically illustrates the exemplary female plug FP1 according to the invention. Figure 3b schematically illustrates the exemplary male plug MP2 according to the invention. Each plugging of a module provides power, supplied from the platform or from the existing stack of modules, to that module. At the same time, the plugging makes the power available at its female plug for modules to be added in the future. Figure 3a focuses on the features of the female plug FP1, which provide power supply, while Figure 3b focuses on the features of the male plug MP2, which provide power supply. In the present example, the female plug FP1 may comprise two rectangular hollows 31 and 32 and the male plug MP2 may comprise two rectangular elements 33 and 34. The two elements 33 and 34 may loosely fit into the two hollows 31 and 32 respectively, so as to enable the current to transit from the AD-module M1 to the SF-module M2. For the sake of clarity, Figures 3a and 3b focus only on the features providing power supply, purposely omitting to represent the features related to data, which are described below.

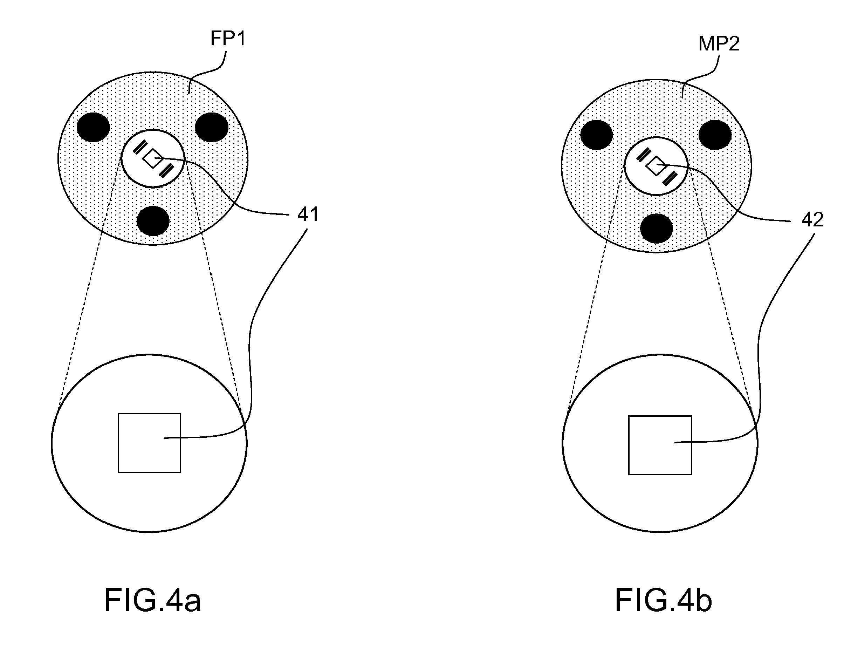

Figure 4a schematically illustrates the exemplary female plug FP1 according to the invention. Figure 4b schematically illustrates the exemplary male plug MP2 according to the invention. Each plugging provides data interface for input of data to the modules and output of data from the modules. Figure 4a focuses on the features of the female plug FP1, which provide data interface, while Figure 4b focuses on the features of the male plug MP2, which provide data interface. In the present example, the female plug FP1 may comprise a short-range wireless communication transceiver 41 and the male plug MP2 may comprise a short-range wireless communication transceiver 42. The transceivers 41 and 42 may face each other, so as to enable data to be exchanged between the AD-module M1 and the SF-module M2. For the sake of clarity, Figures 4a and 4b focus only on the features providing data interface, purposely omitting to represent the features related to power supply, which have been described above.

To be operable in a naval environment, each plugging may be provided with sealing means, so as to keep humidity and water away from the plugs. For example, one or more ring-shaped rubber seals may be arranged around the plugs.

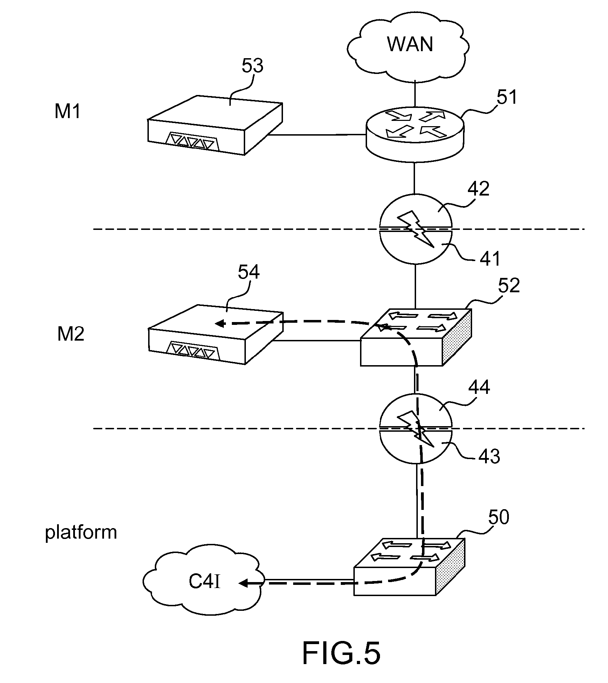

Figure 5 schematically illustrates how, in the present exemplary distributed surveillance system, the modules may be interconnected so as to extend the network connectivity, each module including a network segment. For example, the male plug at the bottom side of the SF-module M2, comprising a wireless communication transceiver 44, may be plugged into a female plug of the platform, which may be a navy ship, comprising a wireless communication transceiver 43. The result is that the network segment of the SF-module M2 extends the network of a Command Control Computer Communication and Integration (C4l) system at the navy ship. The wireless transceivers 43 and 44 may be similar to the wireless communication transceivers 41 and 42. For example, the male plug at the bottom side of the AD-module M1, comprising the wireless communication transceiver 42, may be plugged into the female plug at the top side of the SF-module M2, comprising the wireless communication transceiver 41. In this particular case, the network on the navy ship is integrated into a Wide Area Network (WAN), consisting of a number of geographically dispersed platforms containing at least an AD-module. Hereby, host processing units 53 and 54 embedded in the AD-module M1 and in the SF-module M2, respectively, may exchange data with the C4l system available on the navy ship. For example, the host processing unit 54 may send and receive track data to/from the C4l network, as illustrated in Figure 5 by a bidirectional arrow in dashed line. These data may be received and forwarded by switches 50 and 52 embedded in the platform and in the SF-module M2, respectively. A router 51 may be embedded in the AD-module M1 for the same purpose of routing the data.

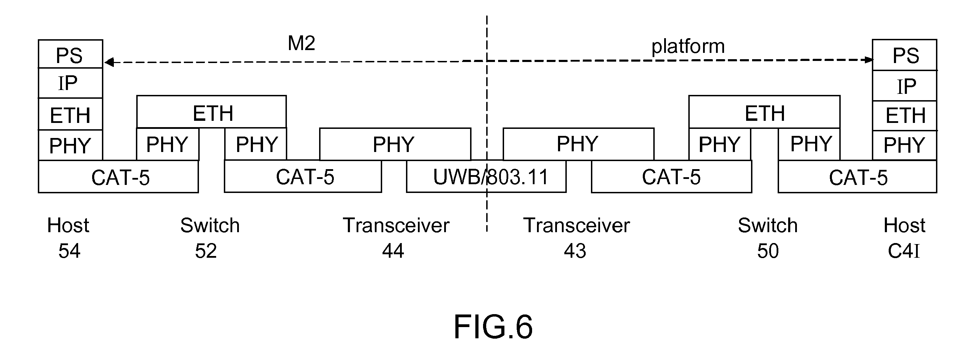

The protocol stack in Figure 6 schematically illustrates the communication layers each entity may have to process to exchange data, for example track data. For example, the host processing unit 54 may have to process the Publish Subscribe (PS) layer, the Internet Protocol (IP) layer, the Ethernet (ETH) layer, the physical (PHY) layer and the physical medium (CAT-5) layer to send or receive the track data. The switch 52 may have to process the ETH layer, the PHY layer and the CAT-5 layer to switch the track data. The wireless transceivers 44 and 43 may have to process the PHY layer and the physical medium layer, for example ultra wideband (UWB) or 803.11, to emit or receive the track data. The C4l system at the platform may have to process the PS layer, the IP layer, the ETH layer, the PHY layer and the CAT-5 layer to send or receive the track data.
The following Table 1 shows a number of eligible platforms:

**Table 1 - Eligible platforms**

| **Platform** | fixed | portable | mobile |
|---|---|---|---|
| dedicated | - pylon - truss tower | - spar buoy - container | - small vessel - FIC - 4W D |
| opportunity | - offshore rig | - LPD | - HVU |

In Table 1, LPD states for "Landing Platform Dock", FIC for "Fast Intercept Craft", 4WD for "Four Wheel Drive" and HVU for "High Value Unit". The columns indicate whether platforms are bound to one location (fixed), or can be moved from one place to another (portable), or are able to move by themselves (mobile). The rows indicates the primary purpose of the platform. The primary purpose of dedicated platforms is to support modules according to the invention, while opportunity platforms have other primary purposes. For example, an oil rig's primary purpose is to support the drilling of oil, however it can also be used for hosting modules according to the invention. A spar buoy is typically a dedicated platform, which may relatively easily be moved to other locations.

Thus, a further advantage of the present invention in any of its aspects is that it enables easy and fast integration, reconfiguration, extension and maintenance of the distributed surveillance system. However, the invention is not only applicable in distributed surveillance system, but can also be used in single platform systems or any other systems. Yet a further advantage of the present invention is that a wide variety of platforms dealing with a wide variety of missions, whether it is for navy or commercial purposes, may physically support the modules according to the invention.

## Claims

1. A scalable apparatus adapted to provide a range of functionalities, the apparatus comprising a plurality of hardware modules, each module implementing one or a plurality of the said functionalities, the apparatus being **characterized in that** the modules are connectable one to the others by stacking them one on the others, so as to provide an operable set of functionalities.

2. A scalable apparatus as claimed in Claim 1, **characterized in that** each hardware module comprises a first connection on one of its side and a second connection on the side opposite.

3. A scalable apparatus as claimed in Claim 2, **characterized in that** the first connection is a male plug on the bottom side and the second connection is a female plug on the top side, so as to allow recursive coupling of modules.

4. A scalable apparatus as claimed in Claim 3, **characterized in that** each plugging of a male plug into a female plug provides mechanical support, power supply and data interface.

5. A scalable apparatus as claimed in Claim 4, **characterized in that** the module at the bottom of the stack is pluggable into a platform which supplies power.

6. A scalable apparatus as claimed in Claim 5, **characterized in that** the platform is a naval ship.

7. A scalable apparatus as claimed in any of the preceding claims, **characterized in that** one of the hardware modules provides a data distribution functionality (M1).

8. A scalable apparatus as claimed in any of the preceding claims, **characterized in that** one of the hardware modules provides a surveillance functionality (M2).

9. A scalable apparatus as claimed in any of the preceding claims, **characterized in that** one of the hardware modules provides a temporal and/or spatial reference functionality (M4).

10. A scalable apparatus as claimed in any of the preceding claims, **characterized in that** one of the hardware modules provides a functionality for observing surface objects by optical means (M3).

11. A scalable apparatus as claimed in Claim 10, **characterized in that** the module (M3) providing the functionality for observing surface objects comprises one or a plurality of cameras (11, 12, 13) ensuring a 360° coverage, each camera providing:
- a pan control functionality and/or;
- a tilt control functionality and/or;
- a zoom control functionality and/or;
- a snapshot functionality and/or;
- a video streaming functionality.

12. A scalable apparatus as claimed in Claim 10, **characterized in that** the module (M3) providing the functionality for observing surface objects comprises a plurality of cameras (11, 12, 13), at least one of said cameras (11) providing a functionality for tracking surface objects, while the other cameras (12, 13) simultaneously provide a 360° surveillance functionality.

13. A scalable apparatus as claimed in Claim 4, **characterized in that** the female plug comprises three cylindrical hollows (21, 22, 23) and the male plug comprises three cylindrical elements (24, 25, 26), the three cylindrical elements tightly fitting into the three cylindrical hollows respectively, so as to provide firm and solid coupling of modules.

14. A scalable apparatus as claimed in Claim 4, **characterized in that** the female plug comprises two rectangular hollows (31, 32) and the male plug comprises two rectangular elements (33, 34), the two elements loosely fitting into the two hollows respectively, so as to enable the current to transit between modules.

15. A scalable apparatus as claimed in Claim 4, **characterized in that** the female plug comprises a short-range wireless communication transceiver (41) and the male plug comprises a short-range wireless communication transceiver (42), the transceivers facing each other, so as to enable data to be exchanged between modules.

16. A scalable apparatus as claimed in Claim 5 and 15, **characterized in that** each pluggable module (M1, M2) includes a network segment, which comprises:
- a communication host (53, 54), and;
- a router (51) or a switch (54);
so as to extend the network of the platform and/or the network of the existing stack of modules.
